# EUROPÄISCHE PATENTSCHRIFT

(11) **EP 0 511 460 B1**
(45) Veröffentlichungstag und Bekanntmachung des Hinweises auf die Patenterteilung: **13.09.1995**
(21) Anmeldenummer: 92101405.6
(22) Anmeldetag: 29.01.1992
(51) Int. Cl.: F16L 47/04, F16L 19/08

(54) **Anschlussverschraubung für Kunststoffrohre**
Plastic pipe screw connection
Connecteur à vis pour tuyaux en matière plastique

(30) Priorität: 30.03.1991 DE 9103916 U
(43) Veröffentlichungstag der Anmeldung: 04.11.1992
(73) Patentinhaber: Metallwerke Gebr. Seppelfricke GmbH & Co., D-45881 Gelsenkirchen (DE)
(72) Erfinder: Seppelfricke, Otto, Dipl.-Ing., W-4650 Gelsenkirchen (DE); Haense, Karl-Heinz, W-4370 Marl (DE)
(74) Vertreter: Hosbach, Hans Ulrich

(56) Entgegenhaltungen:
- WO-A-89/01586
- DE-A- 2 000 921
- DE-A- 3 204 123
- DE-U- 7 638 503
- GB-A- 2 186 934
- US-A- 3 056 617

## Beschreibung

Die Erfindung betrifft eine Anschlußverschraubung für Kunststoffrohre gemäß dem Oberbegriff des Hauptanspruchs. Eine Anschlußverschraubung dieser Art ist aus der GB-A-2 186 934 bekannt.

Bei der vorgenannten bekannten Anschlußverschraubung besteht das Klemmglied aus einer Art konischen Scheibe, die das Rohrende ringförmig umgibt und zwischen zwei radialen Abstützflächen, die sich an der mit dem Verschraubungskörper zusammenschraubbaren Mutter und an einem in den Verschraubungskörper eingesetzten und ringförmig das Rohrende umgebenden Spannglied befinden, axial zusammengedrückt wird, um dadurch den kleineren Scheibenrand gegen die Rohroberfläche anzudrücken. Dieses Andrücken des Scheibenrandes kann insbesondere bei Kunststoffrohren ringförmige Kerben in die Rohroberfläche einschneiden und nachteilige Kerbwirkungen hervorrufen. Das Spannglied hat rückseitig eine konisch sich erweiternde Innenfläche, hinter der sich im Verschraubungskörper eine einen Dichtungsring enthaltende Dichtkammer befindet und wird mit dem spitz zulaufenden hinteren Ende an dem Verschraubungskörper gegen den von dem konisch scheibenförmigen Klemmglied ausgeübten Axialdruck abgestützt. Diese Abstützung an dem spitzen hinteren Spanngliedende erzeugt hohe Flächenpressungen und kann zu Beschädigungen des spitzen hinteren Spanngliedendes führen. Der von der konisch sich erweiternden Spanngliedinnenfläche axial in die Dichtkammer hineingedrückte Dichtungsring wird gegen eine an die Spanngliedinnenfläche sich anschließende und konisch sich wieder verengende Innenseite des Verschraubungskörpers angedrückt. Wenn der Dichtungsring in der üblichen Weise einen den Rohraußendurchmesser unterschreitenden Innendurchmesesr hat, um durch eine gewisse radiale Vorspannung das Rohrende stramm und dicht zu umgeben, besteht beim Einschieben des Rohrendes in den Verschraubungskörper während der Montage der Anschlußverschraubung die Gefahr, daß der Dichtungsring von dem Rohrende axial weiter unter die konische Innenseite des Verschraubungskörpers gedrückt wird und dann nicht mehr an der rückseitigen konischen Innenfläche des Spanngliedes abdichtend anliegt oder daß der Dichtungsring entlang der konischen Innenseite des Verschraubungskörpers ganz aus der Dichtkammer herausgequetscht wird.

Aus dem DE-GM 76 38 503 ist eine Anschlußverschraubung bekannt, bei der hinter einer unmittelbar das Klemmglied axial abstützenden Anschlagfläche des Verschraubungskörpers eine Dichtkammer gebildet ist, die von einer in Richtung zu der Anschlagfläche hin konisch sich verengenden Innenseite des Verschraubungskörpers und einer den Dichtungsring axial in der Einschieberichtung des Rohrendes abstützenden radialen Schulter des Verschraubungskörpers begrenzt wird, so daß der Dichtungsring von dieser radialen Schulter aus durch in die Dichtkammer eindringendes Medium zunehmend abdichtend in den sich verengenden Hohlraum unterhalb der komischen Innenfläche des Verschraubungskörpers hineingedrückt werden kann. Diese bekannte Anschlußverschraubung hat jedoch den Nachteil, daß die Herstellung der komischen Dichtkammer im Innern des Verschraubungskörpers durch spanabhebende Bearbeitung der Verschraubungskörperinnenseite aufwendig und teuer ist.

Die Erfindung hat zur Aufgabe, eine Anschlußverschraubung zu schaffen, die die Nachteile der aus der GB-A-2 186 934 sowie auch der aus dem DE-GM 76 38 503 bekannten Anschlußverschraubungen vermeidet.

Diese Aufgabe löst die Erfindung bei einer Anschlußverschraubung der eingangs genannten Art durch die im Kennzeichen des Patentanspruchs angeführten Merkmale.

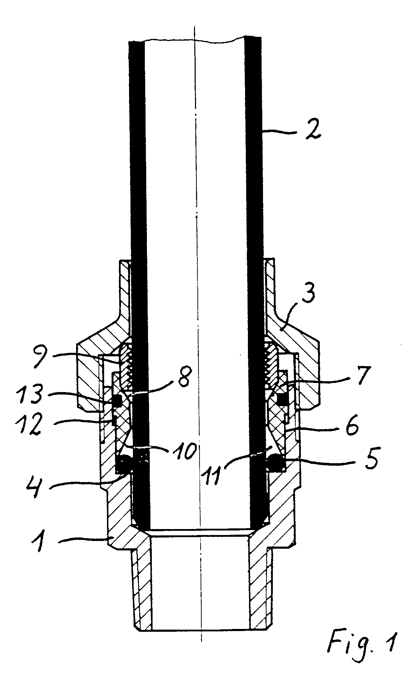

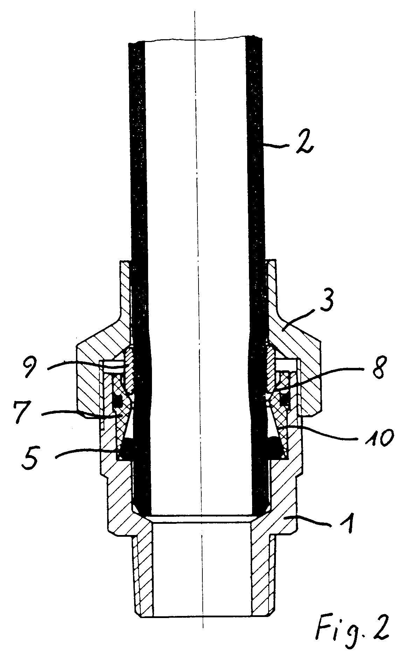

In der Zeichnung ist im Längsschnitt ein Ausführungsbeispiel der erfindungsgemäßen Anschlußverschraubung dargestellt, wobei die Figur 1 die Anschlußverschraubung zu Beginn der Montage und die Figur 2 nach Beendigung der Montage zeigt.

Die Anschlußverschraubung enthält einen üblicherweise aus Metall bestehenden Verschraubungskörper 1, der das Ende eines Kunststoffrohres 2 aufnimmt. Eine auf das Kunststoffrohr 2 übergeschobene Überwurfmutter 3 ist auf den Verschraubungskörper 1 aufschraubbar. Der Verschraubungskörper 1 bildet mit dem Rohrende einen Ringraum, der an einer Schulter 4 endet. Diese Schulter 4 stützt einen in den Ringraum eingesetzten Dichtungsring bzw. O-Ring 5 axial in der Einschieberichtung des Rohrendes 2 ab. Bis zu der Schulter 4 ist der Verschraubungskörper 1 mit einer einfach herstellbaren zylindrischen Innenseite 6 ausgebildet. In den Ringraum ist eine Spannhülse 7 eingesetzt, die mit einer zylindrischen Außenseite an der zylindrischen Innenseite 6 des Verschraubungskörpers 1 axial verschiebbar anliegt. Diese gesondert und einfach herstellbare und nachträglich in den Verschraubungskörper einsetzbare Spannhülse 7 enthält und bildet einerseits an ihrem vorderen Teil eine Anschlagfläche 8, die einen Klemmring 9 gegen den axialen Druck der Überwurfmutter 3 abstützt, und ist andererseits an ihrem hinteren Teil mit einer zum hinteren Hülsenende konisch sich erweiternden Innenfläche 10 ausgebildet, durch die im Innern des Verschraubungskörpers 1 eine entgegen der Einschieberichtung des Rohrendes 2 konisch sich verengende Dichtkammer 11 gebildet wird. Die Spannhülse 7 ist mit Ihrem spitz zulaufenden hinteren Hülsenende zwischen den Dichtungsring 5 und die Innenseite 6 des Verschraubungskörpers 1 einschiebbar. Die Innenseite 6 des Verschraubungskörpers 1 und die Außenseite der Spannhülse 7 sind mit zusammenwirkenden radialen Anschlagflächen 12 ausgebildet, die beim Anziehen der Überwurfmutter 3 und Verspannen des Klemmringes 9 die Einschiebbarkeit der Spannhülse 7 in den Verschraubungskörper 1 begrenzen, bevor das spitz zulaufende hintere Ende der Spannhülse 7 die den Dichtungsring 5 abstützende Schulter 4 berührt und dadurch eventuell beschädigt wird. Vorteilhafterweise ist die mit dem Klemmring 9 zusammenwirkende Anschlagfläche 8 am vorderen Ende der Spannhülse 7 als Konusfläche ausgebildet, so daß der Klemmring 9 beim Anziehen der Überwurfmutter 3 durch die Berührung an einer üblicherweise konischen Innenfläche der Überwurfmutter 3 wie auch durch die Berührung an der Konusfläche 8 der Spannhülse 7 radial gestaucht und gegen das Rohrende 2 angedrückt wird.

Bei der Montage der Anschlußverschraubung wird der in den Verschraubungskörper 1 eingelegte Dichtungsring 5 von dem hindurchgesteckten Kunststoffrohrende 2 im Innendurchmesser etwas elastisch aufgeweitet, so daß der Dichtungsring 5 zu Beginn der Montage mit einer gewissen Vorspannung an der Rohroberfläche anliegt. Hierbei braucht der Dichtungsring 5 nur mit einer geringen Vorspannung an der Rohroberfläche anzuliegen, was den Vorteil hat, daß der Innendurchmesser des Dichtungsringes 5 nur geringfügig kleiner zu sein braucht als der Rohraußendurchmesser und das Kunststoffrohrende dadurch leicht in den Dichtungsring eingeführt werden kann. Durch das Anziehen der Überwurfmutter 3 wird dann die Spannhülse 7 von der in Figur 1 dargestellten anfänglichen Lage in die in Figur 2 dargestellte Lage verschoben und wird dadurch das spitz zulaufende hintere Ende der Spannhülse 7 zwischen den Dichtungsring 5 und die Innenseite 6 des Verschraubungskörpers 1 gezwängt, wodurch der Dichtungsring 5 mit einer bereits durch den Montagevorgang selber bewirkten erhöhten radialen Anpressung gegen die Rohroberfläche gedrückt wird und nach Fertigstellung der Montage von Anfang an auch dann einwandfrei gegenüber dem Kunststoffrohrende abdichtet, wenn die Rohroberfläche durch Kratzer, Riefen oder dergleichen beschädigt sein sollte. Der Dichtungsring 5 hat auch noch in dem in Figur 2 dargestellten zusammengeschraubten Zustand der Anschlußverschraubung eine kleinere axiale Ausdehnung als die Dichtkammer 11, so daß auch im zusammengeschraubten Zustand der Anschlußverschraubung noch ein axialer Hohlraum zwischen dem Dichtring und der Spannhülse 7 freigelassen bleibt. In diesen Hohlraum kann infolgedessen der Dichtungsring 5 entlang der konischen Innenfläche 10 der Spannhülse 7 hineingedrückt werden, wenn Medium zwischen den Dichtungsring 5 und die Schulter 4 des Verschraubungskörpers 1 eindringt, so daß mit zunehmendem Druck des Mediums in dem Rohr 2 selbsttätig eine die Dichtheit der Anschlußverschraubung erhöhende zunehmende radiale Pressung des Dichtungsringes 5 eintritt. Hierfür kann der Dichtungsring 5 eine hohe elastische Verformbarkeit aufweisen, da er nicht die axiale Verschraubungskraft der Anschlußverschraubung aufzunehmen braucht, die von den zusammenwirkenden radialen Anschlagflächen 12 aufgenommen wird.

Wegen des zwischen Dichtungsring 5 und Verschraubungskörper 1 sich eindrückenden spitzen hinteren Endes der Spannhülse 7 ist es bei Anwendung einer Spannhülse aus Metall erforderlich, auf der Außenseite der Spannhülse 7 einen Dichtungsring 13 vorzusehen, mit dem die Spannhülse 7 bei axialer Verschiebbarkeit im Verschraubungskörper 1 zuverlässig abdichtend an der Innenseite 6 des Verschraubungskörpers 1 anliegt. Bei Verwendung eines Kunststoffs für die Spannhülse 7 kann die Verformbarkeit des Kunststoffmaterials gegebenenfalls ausreichen, um den die Anschlagfläche 8 enthaltenden vorderen Teil der Spannhülse 7 durch das radiale Zusammenwirken mit der Klemmhülse 9 etwas aufzuweiten und hinreichend dicht gegen die Innenseite 6 des Verschraubungskörpers 1 anzudrücken, so daß bei einer Kunststoff-Spannhülse 7 unter Umständen der Dichtungsring 13 entbehrlich sein kann.

## Patentansprüche

1. Anschlußverschraubung für Kunststoffrohre, mit einem das Rohrende (2) aufnehmenden und mit diesem einen Ringraum bildenden Verschraubungskörper (1), mit einer mit dem Verschraubungskörper zusammenschraubbaren Überwurfmutter (3), mittels der ein im Ringraum das Rohrende umgebendes Klemmglied (9) axial gegen eine Anschlagfläche (8) andrückbar und dabei radial gegen das Rohrende anpreßbar ist, mit einem im Ringraum das Rohrende umgebenden und axial am Verschraubungskörper anliegenden Spannglied (7), das vorderseitig die Anschlagfläche (8) für das Klemmglied (9) enthält und rückseitig eine konisch sich erweiternde Innenfläche (10) besitzt, und mit einer hinter der konischen Spanngliedinnenfläche (10) im Verschraubungskörper (1) gebildeten Dichtkammer (11), in der ein Dichtungsring (5) an der Rohroberfläche und an der konischen Spanngliedinnenfläche (10) sowie in der Einschieberichtung des Rohrendes an einer Stützfläche (4) des Verschraubungskörpers anliegt, dadurch gekennzeichnet, daß das Klemmglied aus einer Klemmhülse (9) und das Spannglied aus einer Spannhülse (7) bestehen und daß die Anschlagfläche (8) an der Spannhülse sowie die die Klemmhülse berührende Innenfläche der Überwurfmutter (3) als eine auf die Klemmhülse (9) radial zusammendrückend einwirkende Konusfläche ausgebildet sind, daß ferner der Dichtungsring (5) von einer radialen Schulter (4) des Verschraubungskörpers gegen Verschieben in der Einschieberichtung des Rohrendes (2) abgestützt ist, daß ferner die Spannhülse (7) an der bis zu der Schulter (4) zylindrisch ausgebildeten Innenseite (6) des Verschraubungskörpers (1) abdichtend anliegt und axial verschiebbar ist und hierbei mit ihrem spitzen hinteren Ende zwischen die zylindrische Verschraubungskörperinnenseite und den Dichtungsring (5) einschiebbar ist, und daß ferner die Innenseite (6) des Verschraubungskörpers (1) und die Außenseite der Spannhülse (7) mit zusammenwirkenden radialen Anschlagflächen (12) ausgebildet sind, die die Einschiebbarkeit der Spannhülse (7) in den Verschraubungskörper (1) vor einer Berührung des spitzen hinteren Endes der Spannhülse (7) mit der radialen Schulter (4) des Verschraubungskörpers (1) begrenzen.

## Claims

1. Screw coupling for plastic pipes with a coupling body (1), which receives the pipe end (2) and together with it defines an annular space, with a coupling nut (3), which may be screwed to the coupling body and by means of which a clamping element (9) surrounding the pipe end in the annular space may be pressed axially against an abutment surface (8) and may thus be pressed radially against the pipe end, with a tapered element (7), which surrounds the pipe end in the annular space and axially engages the coupling body and which includes the abutment surface (8) for the clamping element (9) at the front end and has a conically diverging inner surface (10) at the rear end, and with a sealing chamber (11), which is defined behind the conical tapered element inner surface (10) in the coupling body (1) and in which a sealing ring (5) engages the pipe surface and the conical tapered element inner surface (10) and, in the insertion direction of the pipe end, a support surface (4) on the coupling body, characterised in that the clamping element comprises a clamping sleeve (9) and the tapered element comprises a tapered sleeve (7) and that the abutment surface (8) on the tapered sleeve and the inner surface of the coupling nut (3) contacting the clamping sleeve are constructed as conical surfaces acting on the clamping sleeve (9) to compress it radially, that the sealing ring (5) is further supported by a radial shoulder (4) in the coupling body against sliding in the insertion direction of the pipe end (2), that the tapered sleeve (7) further sealingly engages the inner surface (6), which is of cylindrical construction to the shoulder (4), of the coupling body (1) and is axially slidable and may thus be slid with its pointed rear end between the cylindrical coupling body inner surface and the sealing ring, and that further the inner surface (6) of the coupling body (1) and the outer surface of the tapered sleeve (7) are formed with cooperating radial abutment surfaces (12), which limit the sliding of the tapered sleeve (7) into the coupling body (1) before the pointed rear end of the tapered sleeve (7) contacts the radial shoulder (4) of the coupling body (1).

## Revendications

1. Raccord vissé pour tubes en matière plastique, avec un corps de vissage (1) recevant l'extrémité de tube (2) et constituant avec celui-ci un espace annulaire, avec un écrou-raccord (3) pouvant être assemblé par vissage avec le corps de vissage et au moyen duquel un organe de serrage (9) entourant l'extrémité de tube dans l'espace annulaire peut être pressé axialement contre une surface de butée (8) et être alors pressé radialement contre l'extrémité de tube, avec un organe tendeur (7) entourant l'extrémité de tube dans l'espace annulaire et appuyant axialement sur le corps de vissage et contenant en face avant la surface de butée (8) destinée à l'organe de serrage (9) et ayant en face arrière une face intérieure (10) allant en s'agrandissant de façon conique et avec une chambre d'étanchéité (11) constituée derrière la face intérieure (10) de l'organe tendeur conique dans le corps de vissage (1) et dans laquelle une bague d'étanchéité (5) appuie sur la surface du tube et appuie sur la surface intérieure (10) de l'organe tendeur conique, ainsi que dans la direction d'emboîtement de l'extrémité de tube, sur une face d'appui (4) du corps de vissage, caractérisé en ce que l'organe de tension est constitué d'une douille de serrage (9) et l'organe tendeur est constitué d'une douille de tension (7) et en ce que la surface de butée (8) ménagée sur la douille de tension, ainsi que la face intérieure, en contact avec la douille de serrage (9), de l'écrou raccord (3), sont réalisées sous forme d'une surface conique agissant avec effet de compression radialement sur la douille de serrage (9), en ce qu'en outre la bague d'étanchéité (5) est soutenue par un épaulement radial (4) du corps de vissage contre tout décalage dans la direction d'emboîtement de l'extrémité de tube (2), en ce qu'en outre la douille de tension (7) appuie avec effet d'étanchéité sur la face intérieure (6), de forme cylindrique, jusqu'à l'épaulement (4), du corps de vissage (1) et est déplaçable axialement et peut de même être emboîtée, par son extrémité arrière pointue, entre la face intérieure cylindrique du corps de vissage et la bague d'étanchéité (5), et en ce que, en outre, la face intérieure (6) du corps de vissage (1) et la face extérieure (7) de la douille de tension (7) sont réalisées avec des faces de butée (12) coopérant radialement qui délimitent la possibilité d'emboîtement de la douille de tension (7) dans le corps de vissage (1) pour empêcher tout contact entre l'extrémité arrière pointue de la douille de tension (7) avec l'épaulement radial (4) du corps de vissage (1).
